# EUROPEAN PATENT APPLICATION

(11) **EP 2 708 522 A1**
(43) Date of publication of application: **19.03.2014**
(21) Application number: 12786110.2
(22) Date of filing: 10.05.2012
(51) Int. Cl.: C04B 35/52, C22C 1/10

(54) **METAL-CARBON COMPOSITE MATERIAL AND METHOD FOR PRODUCING SAME**

(30) Priority: 13.05.2011 JP 2011108291
(71) Applicant: Toyo Tanso Co., Ltd., Osaka-shi Osaka 555-0011 (JP)
(72) Inventor: NAKAMURA, Fumishige, Osaka-shi, Osaka 555-0011 (JP); CHEN, Weiwu, Suita-shi, Osaka 565-0871 (JP); MIYAMOTO, Yoshinari, Osaka-shi, Osaka 555-0011 (JP); TOJO, Tetsuro, Osaka-shi, Osaka 555-0011 (JP)
(74) Representative: Ter Meer Steinmeister & Partner
(86) International application number: PCT/JP2012/061992
(87) International publication number: WO 2012/157514

(57) **Abstract**

Provided are a metal-carbon composite material having good workability and a high carbon content and a method for producing the same. The metal-carbon composite material 1 includes a continuous metallic phase 3 and a plurality of carbon particles 2 dispersed in the metallic phase 3. The carbon content in the metal-carbon composite material 1 is 50% or more by volume.

## Description

### Technical Field

This invention relates to metal-carbon composite materials and methods for producing the same.

### Background Art

Carbon materials are materials having light weight and high chemical and thermal stability and further having, despite non-metal, high thermal conductivity, high electrical conductivity, and self-lubricity and are therefore widely used for various purposes. There is a need for the use of a composite of a carbon material and a metallic material depending upon the intended use.

However, carbon materials have difficulty forming composites with metallic materials because of poor wettability with metal and have the disadvantage of being brittle. In view of these points, vigorous research and development has been heretofore conducted on methods for forming a composite of a carbon material and a metallic material.

A known method for producing a metal-carbon composite material is a method of impregnating a carbon material with a metal. For example, Patent Literature 1 discloses a method of impregnating a porous carbon material with aluminum. Patent Literature 2 discloses a method of impregnating a formed graphite body with aluminum, copper or an alloy of them under pressure.

Another known method for producing a metal-carbon composite material is a method of mixing a molten metal and a powdered carbon material together. For example, Patent Literature 3 discloses a method of mixing an aluminum alloy melt and graphite powder together with stirring. Patent Literature 4 discloses a method of introducing graphite particles into an aluminum alloy melt and then die-casing the mixture.

### Citation List

### Patent Literature

Patent Literature 1: JP-A-2003-34587
Patent Literature 2: JP-A-2010-67842
Patent Literature 3: JP-A-H06-297131
Patent Literature 4: JP-A-2003-138328

### Summary of Invention

### Technical Problem

However, the methods disclosed in Patent Literatures 1 to 4 have the disadvantage of having difficulty producing a metal-carbon composite material of high carbon content.

The present invention has been made in view of the foregoing points and an object thereof is to provide a metal-carbon composite material having good workability and a high carbon content and a method for producing the same.

### Solution to Problem

A metal-carbon composite material of the present invention includes a continuous metallic phase and carbon particles. The carbon particles are dispersed in the metallic phase. The metal-carbon composite material of the present invention has a carbon content of 50% or more by volume.

The term "metal" used in the present invention encompasses metal alloys as well. Therefore, the term "metallic phase" encompasses "metal alloy phase" as well. In the present invention, the carbon particles may include those present in agglomerates with no metallic phase in between.

The metallic phase of the metal-carbon composite material according to the present invention is preferably constituted by at least one selected from the group consisting of Al, Cu, Ag, Ni, Bi, Sb, and an alloy containing at least one of these metals.

The metallic phase of the metal-carbon composite material according to the present invention preferably has a thickness of 10 nm to 100 µm.

The carbon particles of the metal-carbon composite material according to the present invention preferably have a particle size in a range of 50 nm to 500 µm.

A method for producing a metal-carbon composite material according to the present invention includes: a mixing step of mixing metal particles and carbon particles to obtain a mixture containing the carbon particles with the metal particles attached to the surfaces of the carbon particles; the step of forming the mixture to obtain a green body; and the step of firing the green body.

In the mixing step of the method for producing a metal-carbon composite material according to the present invention, a binder is preferably further mixed.

In the method for producing a metal-carbon composite material according to the present invention, the metal particles preferably have a particle size in a range of 1/100 to 1/5 of a particle size of the carbon particles.

In the method for producing a metal-carbon composite material according to the present invention, the forming of the mixture is preferably implemented by cold isostatic pressing. Advantageous Effects of Invention

The present invention can provide a metal-carbon composite material having good workability and a high carbon content.

### Brief Description of Drawings

[Fig. 1] Fig. 1 is a schematic cross-sectional view showing a metal-carbon composite material in an embodiment according to the present invention.
[Fig. 2] Fig. 2 is an optical micrograph of an aluminum-carbon composite material obtained in Example 1.
[Fig. 3] Fig. 3 is an optical micrograph of an aluminum-carbon composite material obtained in Example 2.
[Fig. 4] Fig. 4 is an optical micrograph of the joint interface of a joint material obtained in Experimental Example 1.
[Fig. 5] Fig. 5 shows a worked aluminum-carbon composite material (left) obtained in Experimental Example 2 and a graphite die (right) used therein.
[Fig. 6] Fig. 6 shows an aluminum-carbon composite material (left) obtained in Example 3 and a graphite die (right) used therein.

### Description of Embodiments

A description will be given below of an example of a preferred embodiment for working of the present invention. However, the following embodiment is simply illustrative. The present invention is not at all limited by the following embodiment.

The drawings to which the embodiment and the like refer are schematically illustrated, and the dimensional ratios and the like of objects illustrated in the drawings may be different from those of the actual objects. The dimensional ratios and the like of specific objects should be determined in consideration of the following descriptions.

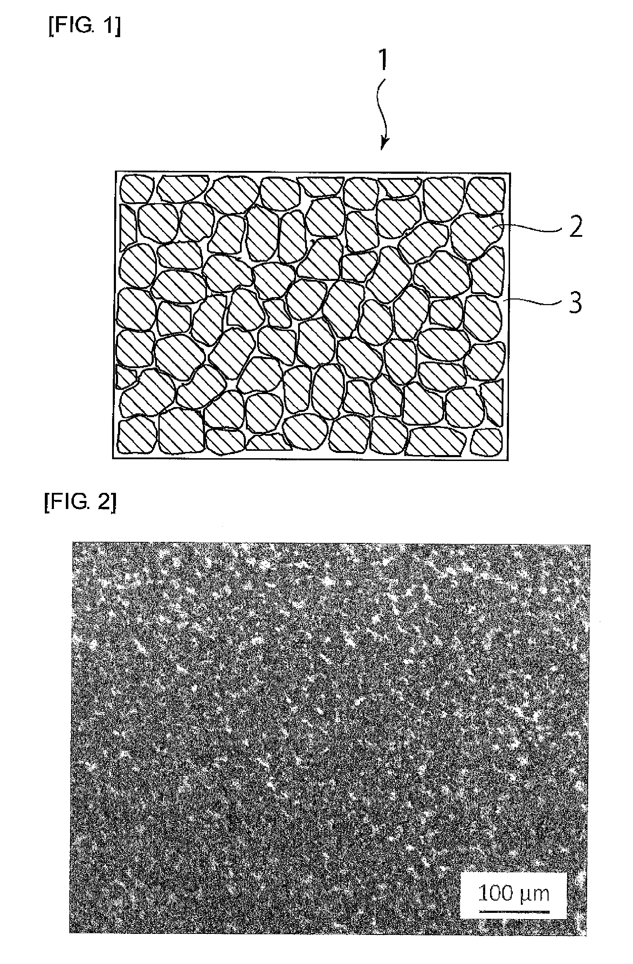

Fig. 1 is a schematic cross-sectional view showing a metal-carbon composite material in an embodiment according to the present invention. In Fig. 1, the hatching of a metallic phase 3 is omitted for convenience of illustration.

As shown in Fig. 1, a metal-carbon composite material 1 includes a continuous metallic phase 3 and a plurality of carbon particles 2.

The plurality of carbon particles 2 are dispersed in the metallic phase 3. The carbon particle 2 is a particle consisting mainly of carbon. The carbon particle 2 may contain components other than carbon. The carbon particle 2 can be constituted, for example, by a graphite particle. The preferred graphite particle for use is, for example, natural graphite, mesophase pitch-based graphite, artificial graphite, kish graphite, or a graphitized substance of mesophase spherule. The carbon particles 2 may include a single type of carbon particles or a plurality of types of carbon particles.

The particle size of the carbon particles 2 is preferably about 50 nm to about 500 µm, more preferably about 1 µm to about 250 µm, and still more preferably about 5 µm to about 100 µm. If the particle size of the carbon particles 2 is too small, the carbon particles 2 will be likely to agglomerate. If the carbon particles 2 agglomerate too much, not only the material workability may degrade but also the strength may decrease. If the carbon particles 2 are too large, the texture of the metal-carbon composite material 1 will be rough, such as uneven thickness of the metallic phase 3, which may decrease the workability and strength.

The metallic phase 3 is preferably formed of a metal unlikely to form a carbide by reaction with carbon. Specific examples of the preferred metal for use as a constituent material of the metallic phase 3 include such metals as Al, Cu, Ag, Ni, Bi, and Sb; and alloys containing at least one of these metals.

The thickness of the metallic phase 3 is generally preferably in a range of about 10 nm to about 100 µm and more preferably in a range of about 1 µm to about 10 µm. The term "thickness of the metallic phase 3" in the present invention refers to a value measured by texture observation with an optical microscope or a scanning electron microscope.

The carbon content of the metal-carbon composite material 1 is 50% or more by volume. The carbon content of the metal-carbon composite material 1 is preferably about 50% to about 99% by volume, more preferably about 60% to about 95% by volume, and still more preferably about 70% to about 90% by volume. In the present invention, the carbon content of the metal-carbon composite material 1 refers to a value calculated from the composition ratio among source materials.

The metallic phase 3 of the metal-carbon composite material 1 has a continuous structure. The metallic phase 3 preferably has a three-dimensional network. The metallic phase 3 lies between the plurality of carbon particles 2. The plurality of carbon particles 2 are connected and integrated by the metallic phase 3. In other words, the metal-carbon composite material 1 has a structure in which the plurality of carbon particles 2 are surrounded by the continuous metallic phase 3. Therefore, the metal-carbon composite material 1 can contain 50% or more by volume carbon. The metallic phase 3 may be composed of a single continuous metallic phase or a plurality of isolated metallic phases. Furthermore, in the metal-carbon composite material 1, the carbon particles 2 may be dispersed in agglomerates in the metallic phase 3. However, the carbon particles 2 are preferably dispersed in the metallic phase 3 to the extent that the metal-carbon composite material 1 can be plastically worked.

The metal-carbon composite material 1 has excellent workability. This can be attributed to the fact that in the metal-carbon composite material 1 of this embodiment the carbon particles 2 are present as particles independent of the metallic phase 3. In other words, the reason can be attributed to that when the metal-carbon composite material 1 is subjected to an external force, the carbon particles 2 do not interfere with plastic deformation of the metallic phase 3.

The metal-carbon composite material 1 has high strength. This can be attributed to that at ordinary temperature, the metal exhibits no fluidity and the metallic phase 3 acts as a filler.

The metal-carbon composite material 1 contains 50% or more by volume carbon. Therefore, the metal-carbon composite material 1 has a low specific gravity and has self-lubricity which is a characteristic of carbon.

The metal-carbon composite material 1 contains the carbon particles 2 and the metallic phase 3 therein is continuous. Therefore, the metal-carbon composite material 1 has excellent electrical conductivity and excellent thermal conductivity.

Since the metal-carbon composite material of this embodiment has excellent characteristics as described above, it can be favorably used as a slide member, a heat radiating member for a semiconductor or an LED, a sealing material or the like.

A description will be given below of an example of a method for producing the metal-carbon composite material 1.

### (Mixing Step)

First, a mixing step is performed. In the mixing step, carbon particles 2 and metal particles are mixed together to obtain a mixture containing the carbon particles 2 with the metal particles attached to the surfaces of the carbon particles 2.

The carbon particles 2 that can be used are as described previously.

The metal particles are particles made of a metal constituting the metallic phase 3. The particle size of the metal particles is preferably in a range of 1/100 to 1/5 of the particle size of the carbon particles. In this case, substantially the entire surface of each carbon particle 2 can be covered with the metal particles. The particle size of the metal particles is more preferably in a range of 1/50 to 1/10 of that of the carbon particles 2 and still more preferably in a range of 1/40 to 1/20 of the same.

The mixture ratio between the carbon particles 2 and the metal particles can be appropriately selected depending upon the carbon content of a desired metal-carbon composite material 1. If a metal-carbon composite material 1 having a high carbon content is desired, the ratio of the carbon particles 2 to the metal particles should be increased. However, if the ratio of the carbon particles 2 to the metal particles is too high, the metal content of the metal-carbon composite material 1 will be too small. Thus, the metallic phase 3 may not be able to be suitably formed. From the viewpoint of suitably forming the metallic phase 3, the mixture ratio between the carbon particles 2 and the metal particles is preferably to such an extent that the surface of each carbon particle 2 is substantially entirely covered with the metal particles.

The mixing of the meal particles and the carbon particles 2 can be implemented, for example, by any mechanical mixing method, any slurry method or a combined method of them.

The mechanical mixing method is a method of mechanically mixing the metal particles and the carbon particles 2. A specific example of the mechanical mixing method is a method in which the metal particles and the carbon particles 2 are mixed, for example, using a planetary centrifugal mixer.

In order to attach the metal particles uniformly to the surfaces of the carbon particles 2, a binder should preferably be mixed in addition to the carbon particles 2 and the metal particles. Usable binders are, for example, known binders. Specific examples of preferred usable binders include, for example, PVA (polyvinyl alcohol) and PVB (polyvinyl butyral).

The slurry method is a method in which the carbon particles 2 and the metal particles are prepared in slurry form and mixed. Specific examples of the slurry method include, for example, the gel-casting method and the slip-casting method. The gel-casting method can be implemented, for example, in the following manner.

In the gel-casting method, the metal particles, a solvent in liquid form, and a binder are mixed together to form a slurry, the carbon particles 2 are added into the slurry and mixed together, and the mixture is then dried, resulting in a solid mixture. For example, the metal particles and the carbon particles 2 are added to an isopropanol organic solvent to which acrylamide and N,N'-methylenebisacrylamide are added as binders, the mixture is stirred in a planetary centrifugal mixer to prepare a slurry, and the slurry is poured into a die and dried, resulting in a solid mixture.

### (Forming Step)

Next, the mixture is formed to obtain a green body. The forming of the mixture can be implemented, for example, by pressing using a pressing machine, such as cold isostatic pressing (CIP).

The mixing in the mixing step and the forming in the forming step may be concurrently performed. For example, in the mixing step, the carbon particles 2 and the metal particles may be mixed together and concurrently formed in a desired shape by the gel-casting method.

No particular limitation is placed on the constituent material of a forming die for use as the die in the pressing machine. For example, a forming die made of graphite can be preferably used.

### (Firing Step)

Next, the green body is fired. Thus, a metal-carbon composite material 1 can be obtained that has a structure in which the plurality of carbon particles 2 are dispersed in the continuous metallic phase 3. The firing temperature and firing time of the green body, the type of firing atmosphere, the pressure in the firing atmosphere and so on can be appropriately selected depending upon the materials, shapes, sizes, and so on of the metal particles and the carbon particles 2. The firing temperature of the green body can be, for example, the softening temperature to the melting temperature of the metal constituting the metal particles. The firing time of the green body can be, for example, about one minute to about one hundred minutes. The type of firing atmosphere can be, for example, vacuum atmosphere or inert gas atmosphere, such as nitrogen or argon. The pressure in the firing atmosphere can be, for example, about 0.2 MPa to about 100 MPa.

### (Plastic Working Step)

The obtained metal-carbon composite material 1 may be further subjected to a plastic working step. The plastic working step is the step of changing the shape of the metal-carbon composite material 1 by applying heat and pressure to the metal-carbon composite material 1 while pressing it against a forming die or the like. For example, by making the green body to be fired into a shape suitable for the firing and then working the fired body into a desired shape in the plastic working step, a metal-carbon composite material 1 can be easily obtained which has been suitably fired and has the desired shape.

The working temperature in the plastic working step can be the softening temperature to the melting temperature of the metal constituting the metal particles. The pressure to be applied to the metal-carbon composite material 1 in the plastic working step can be, for example, about 0.2 MPa to about 100 MPa.

### (Joining Step)

The metal-carbon composite material 1 includes the metallic phase 3 surrounding the carbon particles 2. In other words, the metallic phase 3 is exposed on at least a portion of the surface of the metal-carbon composite material 1. Therefore, for example, after a plurality of metal-carbon composite materials 1 are produced, they can be easily joined together by bringing them into contact with each other and heating them with pressure. Hence, a large-size metal-carbon composite material 1 can be easy produced by producing a plurality of metal-carbon composite materials and then joining them.

The heating temperature and pressure during the joining can be appropriately selected depending upon the type of the metallic phase 3, the size of the metal-carbon composite materials to be joined, the joining area thereof, and so on. The heating temperature during the joining may be, for example, the softening temperature to the melting temperature of the metal constituting the metal particles. The pressure to be applied during the joining can be, for example, about 0.2 MPa to about 100 MPa.

With the method for producing the metal-carbon composite material 1 of this embodiment, the contents of carbon and metal in the metal-carbon composite material 1 can be controlled by controlling the rate of the metal particles to be attached to the carbon particles 2 with respect to the carbon particles 2. The metal particles have only to be present to the extent that they can bond a plurality of carbon particles 2 together in the firing step. Therefore, the content of the metal particles in the green body can be 50% or less by volume. Thus, a metal-carbon composite material 1 having a carbon content of 50% or more by volume can be obtained.

In the method for producing the metal-carbon composite material 1 of this embodiment, the metal particles are attached to the surfaces of the carbon particles 2 and then the mixture of the carbon particles 2 and the metal particles is formed and fired. Therefore, the resultant metal-carbon composite material 1 has a structure in which the plurality of carbon particles 2 are surrounded by the continuous metallic phase 3. Thus, a metal-carbon composite material 1 can be obtained in which the plurality of carbon particles 2 are homogeneously dispersed in the continuous metallic phase 3. In particular, by selecting the particle size of the metal particles within a range of 1/100 to 1/5 of the particle size of the carbon particles 2 and covering substantially the entire surface of each carbon particle 2 with the metal particles, the continuity of the metallic phase 3 can be further increased. Thus, the metal-carbon composite material 1 can possess, upon application of heat, plasticity resulting from the fluidity of the metal and can be improved in thermal conductivity and electrical conductivity as a whole.

Hereinafter, the present invention will be described in more detail with reference to specific examples. The present invention is not at all limited by the following examples. Modifications and variations may be appropriately made therein without changing the gist of the present invention.

### (Example 1)

Aluminum powder (4.04 g) having a particle size of 1 µm, acrylamide (8 g), and a binder solution (4.5 g) containing N,N'-methylenebisacrylamide (1 g) dissolved in isopropanol (45 g) were stirred by planetary centrifugal mixing to obtain a mixture. The planetary centrifugal mixing was performed at 2000 rpm for 60 seconds. An amount of 10 g of mesophase graphite particles having a particle size of 20 µm were added to the obtained mixture and mixed together with stirring at 2000 rpm for 180 seconds by planetary centrifugal mixing. Next, the mixture was dried at 80°C for 8 hours to obtain a dry product. The dry product was formed by cold isostatic pressing (CIP) to obtain a green body. The pressure during CIP was 200 MPa.

Next, the obtained green body was put into a cylindrical graphite die and fired in a hot-pressing furnace, resulting in an aluminum-carbon composite material. In the firing step, the green body was first heated at 20°C/min from room temperature to 700°C, kept at 700°C for 20 minutes, and then cooled at 10 to 15°C/min to room temperature over approximately two hours. The resultant aluminum-carbon composite material had a columnar shape of 10 mm height and 30 mm diameter. The carbon content in the aluminum-carbon composite material was 75% by volume.

An optical micrograph of the aluminum-carbon composite material obtained in Example 1 is shown in Fig. 2. In Fig. 2, the dark-colored portions show graphite particles and the pale-colored portions show aluminum. The photograph shown in Fig. 2 reveals that the graphite particles are covered with aluminum and the aluminum forms a continuous phase.

Next, the aluminum-carbon composite material obtained in Example 1 was measured in terms of bending strength, Shore hardness, Young's modulus, thermal conductivity, and electrical resistivity in the following manners. The results are shown, together with the bulk density of the aluminum-carbon composite material, in Table 1 below.

### [Strength Test]

The aluminum-carbon composite material was cut into a size of 5 mm by 3 mm by 20 mm and the cut piece was measured in terms of bending strength by a three-point bending test. The span was 15 mm and the crosshead speed was 0.5 mm/min.

### [Shore Hardness]

The Shore hardness was measured with a Shore hardness tester Model-D (manufactured by Nakai Precision Machinery Mfg. Co., Ltd.; Model No. 20309). A specimen was measured at five points and the average of the measured values at three points except for the maximum and minimum values was adopted as the Shore hardness. Specifically, the Shore hardness was measured in accordance with JIS Z 2246.

### [Measurement of Young's Modulus]

The Young's modulus was evaluated by analyzing the result of the three-point vending test.

### [Measurement of Thermal Conductivity]

The aluminum-carbon composite material was worked into a disc of 10 mm diameter and 1 mm thickness and the disc was measured in terms of thermal conductivity by a laser flash method.

### [Measurement of Electrical Resistivity]

The surface of the aluminum-carbon composite material was measured in terms of electrical resistivity by a direct current four-probe method.

**[Table 1]**

| Bulk Density | Bending Strength | Shore Hardness | Young's Modulus | Thermal Conductivity | Electrical Resistivity |
|---|---|---|---|---|---|
| 2.2 g /cm³ | 40 MPa | 30 | 25±5 GPa | 90 W/mK | 0.4 µΩm |

### (Example 2)

An aluminum-carbon composite material was produced in the same manner as in Example 1 except for the use of graphite particles having a particle size of 50 µm (artificial graphite powder CCE07PB manufactured by Kojundo Chemical Laboratory Co., Ltd.) instead of the mesophase graphite particles having a particle size of 20 µm. The carbon content in the aluminum-carbon composite material was 75% by volume.

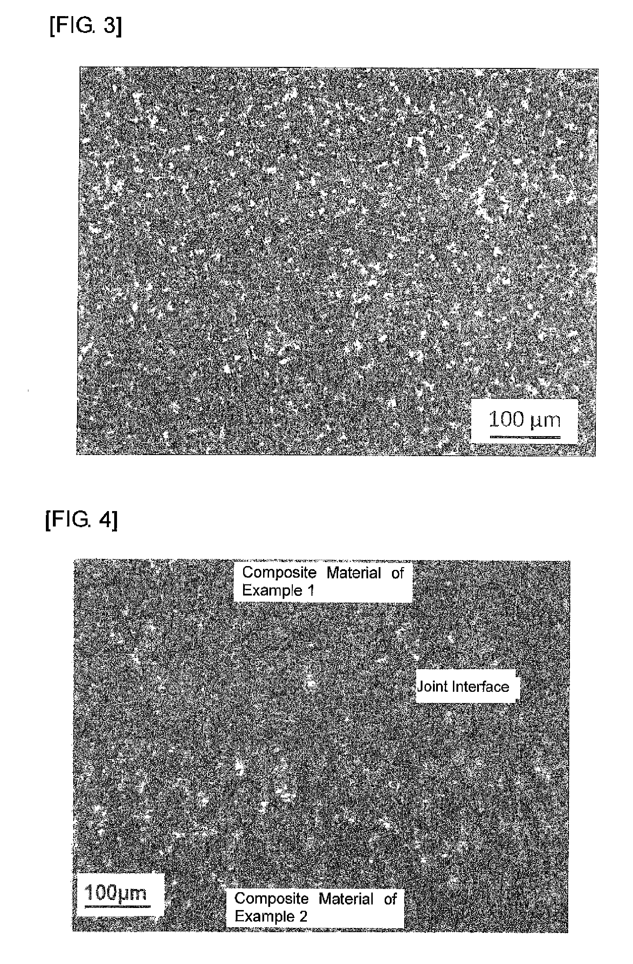

An optical micrograph of the aluminum-carbon composite material obtained in Example 2 is shown in Fig. 3. In Fig. 3, the dark-colored portions show graphite particles and the pale-colored portions show aluminum. The photograph shown in Fig. 3 reveals that the graphite particles are covered with aluminum and the aluminum forms a continuous phase.

The aluminum-carbon composite material produced in Example 2 was also measured, like Example 1, in terms of bending strength, Shore hardness, Young's modulus, thermal conductivity, and electrical resistivity in the above manners. The results are shown, together with the bulk density of the aluminum-carbon composite material, in Table 2 below.

**[Table 2]**

| Bulk Density | Bending Strength | Shore Hardness | Young's Modulus | Thermal Conductivity | Electrical Resistivity |
|---|---|---|---|---|---|
| 2.1 g/cm³ | 80 MPa | 30 | 25±5 GPa | 70 W/mK | 0.7 µΩm |

### (Experimental Example 1)

The two types of aluminum-carbon composite materials obtained in Examples 1 and 2 were subjected to a joint test. Specifically, these two aluminum-carbon composite materials were abutted at their end surfaces against each other and in this state heated at 700°C under a pressure of 40 MPa for 20 minutes. As a result, these two types of aluminum-carbon composite materials were joined together. An optical micrograph of the joint interface of the joint material obtained in Experimental Example 1 is shown in Fig. 4. As also seen from the photograph shown in Fig. 4, the joint surfaces between the two types of aluminum-carbon composite materials are joined with no space between.

### (Experimental Example 2)

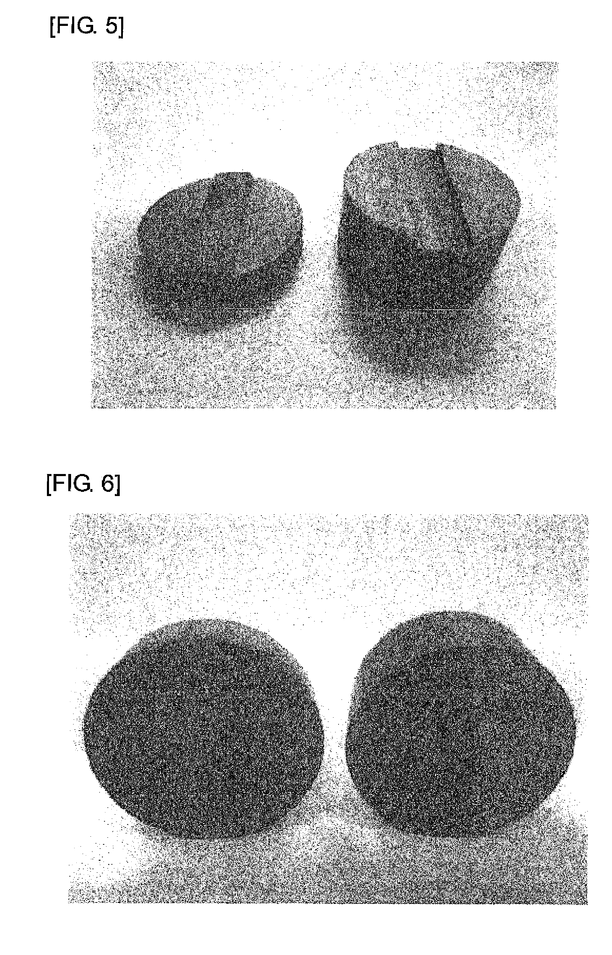

The aluminum-carbon composite material obtained in Example 1 was plastically worked. Specifically, the aluminum-carbon composite material obtained in Example 1 was put into a graphite die with a groove in the inside surface and plastically worked by heating at 700°C under a pressure of 40 MPa for 20 minutes. A worked aluminum-carbon composite material in Experimental Example 2 and the graphite die used therein are shown in Fig. 5. The object at the left of the photograph shown in Fig. 5 is the worked aluminum-carbon composite material and the object at the right thereof is the graphite die used. It can be seen from the photograph shown in Fig. 5 that the groove in the graphite die was suitably transferred to the aluminum-carbon composite material. This reveals that the aluminum-carbon composite material is plastically workable.

### (Example 3)

An aluminum-carbon composite material was produced in the same manner as in Example 1 except that during the firing the green body was fired while a graphite-made die with a raised T-shaped pattern (graphite die) was pressed against the green body. A photograph of the graphite die used in Example 3 and the obtained aluminum-carbon composite material is shown in Fig. 6. The object at the left of the photograph shown in Fig. 6 is the worked aluminum-carbon composite material and the object at the right thereof is the graphite die used.

### Reference Signs List

- 1: metal-carbon composite material
- 2: carbon particle
- 3: metallic phase

## Claims

1. A metal-carbon composite material including:
a continuous metallic phase; and
carbon particles dispersed in the metallic phase,
wherein the metal-carbon composite material has a carbon content of 50% or more by volume.

2. The metal-carbon composite material according to claim 1, wherein the metallic phase is constituted by at least one selected from the group consisting of Al, Cu, Ag, Ni, Bi, Sb, and an alloy containing at least one of these metals.

3. The metal-carbon composite material according to claim 1 or 2, wherein the metallic phase has a thickness of 10 nm to 100 µm.

4. The metal-carbon composite material according to any one of claims 1 to 3, wherein the carbon particles have a particle size in a range of 50 nm to 500 µm.

5. A method for producing a metal-carbon composite material, comprising the steps of:
mixing metal particles and carbon particles to obtain a mixture containing the carbon particles with the metal particles attached to the surfaces of the carbon particles;
forming the mixture to obtain a green body; and
firing the green body.

6. The method for producing a metal-carbon composite material according to claim 5, wherein in the mixing step a binder is further mixed.

7. The method for producing a metal-carbon composite material according to claim 5 or 6, wherein the metal particles have a particle size in a range of 1/100 to 1/5 of a particle size of the carbon particles.

8. The method for producing a metal-carbon composite material according to any one of claims 5 to 7, wherein the forming of the mixture is implemented by cold isostatic pressing.
